# EUROPÄISCHE PATENTSCHRIFT

(11) **EP 3 538 957 B1**
(45) Veröffentlichungstag und Bekanntmachung des Hinweises auf die Patenterteilung: **09.12.2020**
(21) Anmeldenummer: 17792054.3
(22) Anmeldetag: 30.10.2017
(51) Int. Cl.: G04F 10/00, G01S 17/88, G01S 1/10

(54) **ZEIT-DIGITALWANDLEREINRICHTUNG, LIDAR-SYSTEM UND VORRICHTUNG**
TIME-TO-DIGITAL CONVERTER, LIDAR SYSTEM AND DEVICE
CONVERTISSEUR TEMPS-NUMÉRIQUE, SYSTÈME LIDAR ET DISPOSITIF

(30) Priorität: 11.11.2016 DE 102016222136
(43) Veröffentlichungstag der Anmeldung: 18.09.2019
(73) Patentinhaber: Robert Bosch GmbH, 70442 Stuttgart (DE)
(72) Erfinder: SCHNITZER, Reiner, 72762 Reutlingen (DE); ADAMS, Rene, 72622 Nuertingen (DE)
(86) Internationale Anmeldenummer: PCT/EP2017/077810
(87) Internationale Veröffentlichungsnummer: WO 2018/086943

(56) Entgegenhaltungen:
- WO-A1-03/088485
- WO-A1-2013/154543
- CA-A1- 2 379 071
- US-A1- 2015 177 701
- US-B1- 9 209 825

## Beschreibung

### Stand der Technik

Die vorliegende Erfindung betrifft eine Zeit-Digitalwandlereinrichtung, ein LiDAR-System und eine Vorrichtung unter Verwendung des LiDAR-Systems und der Zeit-Digitalwandlereinrichtung.

Zeit-Digitalwandlereinrichtungen, die auch als TDC-Einheiten (TDC : Time-to-Digital) bezeichnet werden, dienen dazu, mit hoher Auflösung und Genauigkeit Zeitpunkte oder Zeitspannen zu erfassen und als digitale Daten bereitzustellen. Dies ist für verschiedene Anwendungen mit Fokus auf Flugzeitmessungen, zum Beispiel bei LiDAR-Systemen, von hoher Relevanz.

Problematisch bei herkömmlichen Zeit-Digitalwandlereinrichtungen ist, dass bei verschiedenen Anwendungen zur Selbstkalibrierung verwendete Stoppereignisse vergleichsweise selten auftreten, so dass in der Zeit zwischen aufeinanderfolgenden Ereignissen die Kalibrierung einer zu Grunde liegenden TDC-Einheit nicht erhalten bleibt. Dies führt zu Messfehlern.

US 2015/0177701 A1 offenbart einen Zeit-Digital-Wandler, der eine Zeitdifferenz zwischen zwei Eingangs-Taktsignalen in einen digitalen Ausgangsbus übersetzt.

Ein weiteres Beispiel eines Zeit-Digital-Wandlers ist aus WO 2013/154543 A1 bekannt. Ferner offenbart US 9, 209, 825 B1 eine Vorrichtung mit einer Vielzahl von Analog-Digital-Wandlerschaltungen (ADCs) und einem Skew-Detektor.

### Offenbarung der Erfindung

Die erfindungsgemäße Zeit-Digitalwandlereinrichtung mit den Merkmalen des unabhängigen Anspruches 1 weist demgegenüber den Vorteil auf, dass auch bei vergleichsweise seltenen Stoppereignissen eine Selbstkalibrierung mit einfachen Mitteln erreicht und aufrechterhalten werden kann. Dies wird erfindungsgemäß mit den Merkmalen des unabhängigen Anspruches 1 dadurch erreicht, dass eine Zeit-Digitalwandlereinrichtung, insbesondere für ein LiDAR-System, geschaffen wird mit mindestens einer selbstkalibrierenden n-stufigen Kette einer Anzahl n von Gatterverzögerungsgliedern, die zwischen einer Taktsignalleitung zum Zuführen eines Taktsignals und einer Stoppsignalleitung zum Zuführen eines Stoppsignals parallel-seriell geschaltet sind, und mit einer Ladungspumpen- und Phasendetektoreinheit zur rückgekoppelten Steuerung der Gatterverzögerungsglieder mit einem ersten Eingang als Regelgrößeneingang, einem zweiten Eingang als Führungsgrößeneingang und mit einem Ausgang als Stellgrößenausgang. Dabei ist die Taktsignalleitung mit dem ersten Eingang der Ladungspumpen- und Phasendetektoreinheit verbunden und eine Gegentaktleitung zum Zuführen eines kontinuierlichen Gegentaktsignals ist mit dem zweiten Eingang verbunden. Zur Rückkopplung sind die Gatterverzögerungsglieder mit dem Ausgang der Ladungspumpen- und Phasendetektoreinheit verbunden, und zwar insbesondere über einen Filter gekoppelt. Über die Gegentaktleitung kann erfindungsgemäß der Ladungspumpen- und Phasendetektoreinheit an den zweiten Eingang als Führungsgrößeneingang angelegt kontinuierlich ein Gegentaktsignal zugeführt werden, um somit eine ständige Selbstkalibrierung über die Regelschleife zu erzwingen, und zwar unabhängig von der An- oder Abwesenheit eines Stoppereignisses auf der Stoppsignalleitung.

Die Unteransprüche zeigen bevorzugte Weiterbildungen der Erfindung.

Ein besonders hohes Maß an Genauigkeit der Kalibrierung stellt sich dann ein, wenn für das Gegentaktsignal eine Wahl in speziell abgestimmter Form getroffen wird. So ist es bei einer vorteilhaften Weiterbildung der erfindungsgemäßen Zeit-Digitalwandlereinrichtung vorgesehen, dass die Gegentaktleitung zum Zuführen des zum Taktsignal inversen oder invertierten Taktsignals als Gegentaktsignal ausgebildet ist.

Insbesondere kann dazu an einem Eingang eine Inversions- oder Invertereinrichtung zum Invertieren des zugeführten Taktsignals ausgebildet sein.

Die erfindungsgemäß vorgesehenen Gatterverzögerungsglieder können verschiedenartige Strukturen aufweisen.

Eine besonders einfacher Aufbau ergibt sich, wenn gemäß einer weiteren bevorzugten Ausgestaltungsform der erfindungsgemäßen Zeit-Digitalwandlereinrichtung ein jeweiliges Gatterverzögerungsglied ein erstes Verzögerungsglied mit oder in der Taktsignalleitung in Serie geschaltet, ein zweites Verzögerungsglied mit oder in der Stoppsignalleitung in Serie geschaltet und dazwischen parallel- und den Verzögerungsgliedern nachgeschaltet eine Flipflopeinheit aufweist.

Bei einer anderen Weiterbildung der erfindungsgemäßen Zeit-Digitalwandlereinrichtung ist eine jeweilige Flipflopeinheit zum Beispiel als D-Flipflop ausgebildet und weist einen Datensignaleingang, einen Taktsignaleingang und einen Datensignalausgang auf.

Dabei kann der Datensignaleingang mit dem Ausgang eines zugeordneten ersten Verzögerungsglieds und der Taktsignaleingang mit dem Ausgang eines zugeordneten zweiten Verzögerungsglieds verbunden sein.

Die sich ergebende Anzahl n erster Verzögerungsglieder kann aufeinanderfolgend in Serie geschaltet in der Taktsignalleitung ausgebildet sein.

Zusätzlich oder alternativ kann die sich ergebende Anzahl n zweiter Verzögerungsglieder aufeinanderfolgend in Serie geschaltet in der Stoppsignalleitung ausgebildet sein.

Die vorgesehenen ersten und zweiten Verzögerungsglieder können in einer 1-zu-1-Korrespondenz zueinander und/oder zu der sich ergebenden Anzahl n von Flipflopeinheiten ausgebildet sein.

Die Gegentaktleitung kann auf verschiedene Weise ausgestaltet sein.

So kann bei einer bevorzugten Weiterbildung der erfindungsgemäßen Zeit-Digitalwandlereinrichtung die Gegentaktleitung in Serie geschaltet eine entsprechende Anzahl n dritter Verzögerungsglieder aufweisen, welche jeweils aufeinanderfolgend den aufeinanderfolgenden zweiten Verzögerungsgliedern zugeordnet und insbesondere mit diesen über Steueranschlüsse gekoppelt sind.

Bei einer bevorzugten Ausführungsform der erfindungsgemäßen Zeit-Digitalwandlereinrichtung sind die zweiten und dritten Verzögerungsglieder in einer 1-zu-1-Korrespondenz zueinander ausgebildet, vorzugsweise zu der sich ergebenden Anzahl n von Flipflopeinheiten. Das bedeutet, dass die zweiten und dritten Verzögerungsglieder vorzugsweise gleichartig oder gleich sind. Nur die ersten Verzögerungsglieder können nach einem andersartigen Konzept verglichen mit demjenigen der zweiten und dritten Verzögerungsglieder aufgebaut sein. Insbesondere können sich die Zeitkonstanten T1 der ersten Verzögerungsglieder und T2 der zweiten und dritten Verzögerungsglieder sich voneinander unterscheiden.

Zur Ausgabe eines ermittelten Zeitwerts, welcher repräsentativ ist für einen Zeitpunkt oder für eine Zeitspanne, ist gemäß einer anderen vorteilhaften Ausgestaltungsform der erfindungsgemäßen Zeit-Digitalwandlereinrichtung diese mit einem Ausgabebus ausgebildet, welcher mit den Datenausgangsanschlüssen der Flipflopeinrichtungen verbunden ist.

Zur Realisierung der Rückkopplung kann gemäß einer anderen Ausführungsform der erfindungsgemäßen Zeit-Digitalwandlereinrichtung der Ausgang der Ladungspumpen- und Phasendetektoreinheit als Stellgrößenausgang mit den ersten Verzögerungsgliedern verbunden sein, insbesondere über einen jeweiligen Steuereingang und/oder über einen Filter gekoppelt.

Zur Realisierung der Rückkopplung kann dabei insbesondere der Ausgang der Ladungspumpen- und Phasendetektoreinheit als Stellgrößenausgang über einen Tiefpassfilter mit Masse verbunden sein.

Ferner betrifft die vorliegende Erfindung ein LiDAR-System welches zur Flugzeitbestimmung eine Zeit-Digitalwandlereinrichtung gemäß der vorliegenden Erfindung aufweist.

Des Weiteren betrifft die Erfindung auch eine Vorrichtung und insbesondere ein Fahrzeug, vorzugsweise ein Kraftfahrzeug, welches zur Entfernungsbestimmung und/oder zur Umgebungserfassung- oder -überwachung ein erfindungsgemäß ausgestaltetes LiDAR-System aufweist.

### Kurzbeschreibung der Figuren

Unter Bezugnahme auf die beigefügten Figuren werden Ausführungsformen der Erfindung im Detail beschrieben.
- Figur 1: ist ein schematisches Blockdiagramm einer ersten Ausführungsform der erfindungsgemäßen Zeit-Digitalwandlereinrichtung.
- Figur 2: ist ein schematisches Blockdiagramm einer anderen Ausführungsform der erfindungsgemäßen Zeit-Digitalwandlereinrichtung.

### Bevorzugte Ausführungsformen der Erfindung

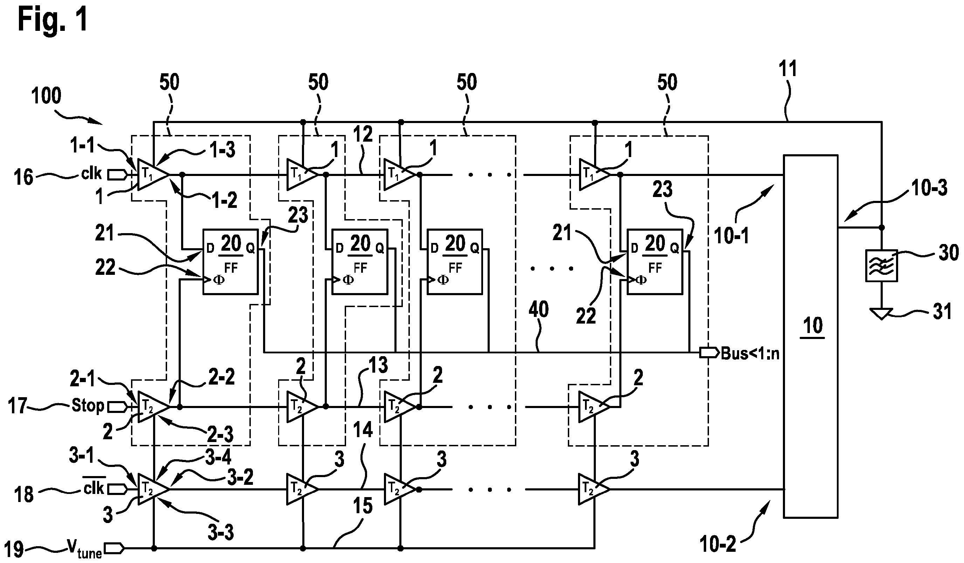

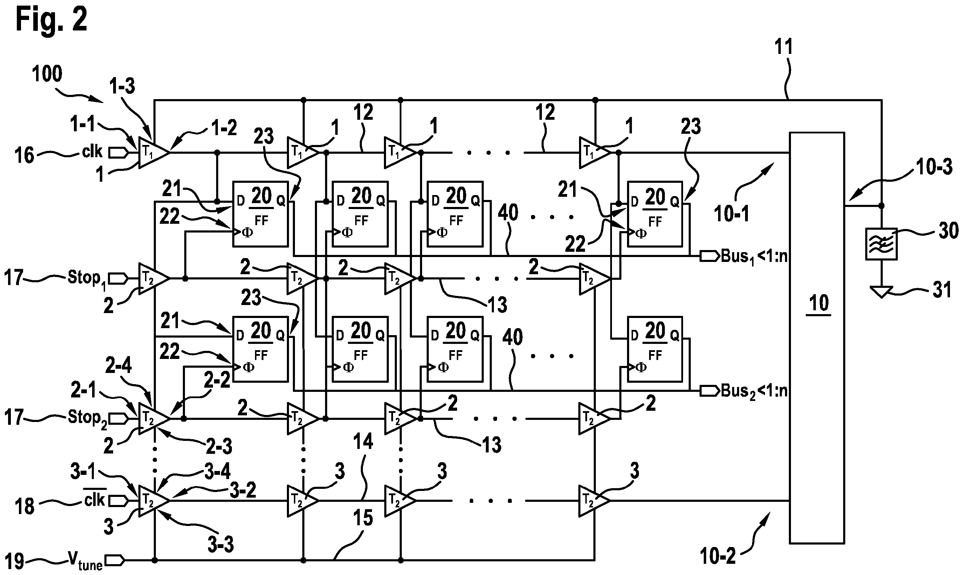

Nachfolgend werden unter Bezugnahme auf die Figuren 1 und 2 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 zeigt nach Art eines schematischen Blockdiagramms eine erste Ausführungsform der erfindungsgemäßen Zeit-Digitalwandlereinrichtung 100.

Die Ausführungsform der in Figur 1 gezeigten erfindungsgemäßen Zeit-Digitalwandlereinrichtung 100 dient der Auswertung einer einzelnen Datenquelle, zum Beispiel eines einzelnen Pixels eines LiDAR-Systems.

Kernbestandteil ist dabei eine Abfolge einer Anzahl n von Gatterverzögerungsgliedern 50 im Zusammenhang mit einer Taktsignalleitung 12 und einer Stoppsignalleitung 13.

Jedes Gatterverzögerungsglied 50 besteht aus einem ersten Verzögerungsglied 1, hier mit einer Verzögerungszeit T1, einem zweiten Verzögerungsglied 2, hier mit einer Verzögerungszeit T2, die insbesondere von der Verzögerungszeit T1 verschieden sein kann, und einer Flipflopeinheit 20, hier in Form eines D-Flipflops.

Mit der Anzahl n von Gatterverzögerungsgliedern 50 liegen also auch entsprechende Anzahlen n erster Verzögerungsglieder 1 und zweiter Verzögerungsglieder in 2 vor.

Die ersten Verzögerungsglieder 1 sind in der Taktsignalleitung 12 aufeinanderfolgend in Reihe geschaltet. Die zweiten Verzögerungsglieder 2 sind in der Stoppsignalleitung 13 aufeinanderfolgend in Reihe geschaltet.

Die D-Flipflops 20 sind jeweils einem Paar aus erstem Verzögerungsglied 1 und zweitem Verzögerungsglied 2 zugeordnet, wobei ein Datenanschluss 21 des D-Flipflops 20 mit dem Ausgang 1-2 eines zugeordneten ersten Verzögerungselements 1 und der Takteingang 22 des jeweiligen D-Flipflops 20 mit dem Ausgang 2-2 des jeweils zugeordneten zweiten Verzögerungselements 2 verbunden ist. Ein jeweiliger Datenausgang 23 eines D-Flipflops 20 ist mit einem gemeinsamen Ausgangsbus 40 verbunden.

Die Taktsignalleitung 12 wird auf einer Eingangsseite mit dem Taktsignal 16 gespeist und ist auf der Ausgangsseite mit einem ersten Eingang 10-1 als Regelgrößeneingang der Ladungspumpen- und Phasendetektoreinheit 10 verbunden.

Erfindungsgemäß ist zur Realisierung einer kontinuierlichen Selbstkalibrierung eine Gegentaktsignalleitung 14 ausgebildet, welcher auf einer Eingangsseite ein Gegentaktsignal 18, zum Beispiel das invertierte Signal zum Taktsignal 16, zugeführt wird und welche auf der Ausgangsseite mit einem zweiten Eingang 10-2 als Führungsgrößeneingang der Ladungspumpen- und Phasendetektoreinheit 10 verbunden ist.

In der Gegentaktsignalleitung 14 ist eine entsprechende Anzahl n dritter Verzögerungsglieder 3, hier mit der identischen Verzögerungszeit T2, aufeinanderfolgend in Reihe geschaltet ausgebildet. Dabei liegen die zweiten Verzögerungsglieder 2 und die dritten Verzögerungsglieder 3 in einer 1-zu-1-Zuordnung gekoppelt miteinander vor, insbesondere über Steueranschlüsse 2-3 und 3-4 der zweiten bzw. dritten Verzögerungsglieder 2, 3.

Zum Schließen der Rückkopplungsschleife ist der Ausgang 10-3 der Ladungspumpen- und Phasendetektoreinheit 10 als Stellgrößenausgang mit den ersten Verzögerungsgliedern 1, insbesondere über deren Steueranschluss 1-3, verbunden. In vorteilhafter Weise kann zur Realisierung der Rückkopplung der Stellgrößenausgang 10-3 der Ladungspumpen- und Phasendetektoreinheit 10 über einen Tiefpassfilter 30 mit Masse 31 verbunden sein. Das Ausgangssignal der Ladungspumpen- und Phasendetektoreinheit 10 ist oder entspricht einem Stromsignal. Dieses wird über den Filter 30 in ein Spannungssignal gewandelt. Insbesondere dieses Spannungssignal eignet sich als Steuersignal der ersten Verzögerungsglieder 1.

Die erfindungsgemäßen Vorteile stellen sich bei der Anordnung der Zeit-Digitalwandlereinrichtung 100 gemäß Figur 1 dadurch ein, dass unabhängig vom Vorliegen oder Nichtvorliegen eines Stoppereignisses auf der Stoppsignalleitung 13 über das kontinuierliche Zuführen eines Gegentaktsignals 18, insbesondere abgeleitet aus der Inversion des eigentlichen Taktsignals 16, an den zweiten Eingang der Ladungspumpen- und Phasendetektoreinheit 10 als Führungsgrößeneingang auch kontinuierlich eine rückgekoppelte Nachregelung des gesamten Messkreises über die Stellgrößenleitung 11 im Anschluss an den Ausgang 10-3 der Ladungspumpen- und Phasendetektoreinheit 10 erfolgt.

In Figur 1 ist noch die optionale Steuerspannungsleitung 15 zum Zuführen einer Steuerspannung 19 in Verbindung mit den zweiten und dritten Verzögerungsgliedern 2 bzw. 3 über deren Steueranschlüsse 2-3, 3-3, 3-4 zur Feinabstimmung dargestellt.

Figur 2 zeigt eine erfindungsgemäße Zeit-Digitalwandlereinrichtung 100 in einer Ausgestaltungsform, welche für eine Mehrzahl von Signalquellen geeignet ist, zum Beispiel für eine Mehrzahl von Pixeln eines zu Grunde liegenden LiDAR-Systems.

Dazu wird die Abfolge aus der Anzahl n von D-Flipflops 20 mit Ausgangsbus 40 und mit Stoppsignalleitung 13 in entsprechender Anzahl wiederholend ergänzt. Dabei sind sämtliche D-Flipflops 20 und zweite Verzögerungsglieder 2 einerseits mit der Taktsignalleitung 12 und andererseits mit der Gegentaktsignalleitung 14 in entsprechender 1-zu-1-Zuordnung mit den dort vorgesehenen ersten und dritten Verzögerungsgliedern 1 bzw. 3 verbunden, so dass eine gemeinsame Rückkopplung über die Stellgrößenleitung 11 erfolgt.

So kann mit apparativ vergleichsweise geringem Aufwand zum Beispiel eine Linienanordnung mit einer Mehrzahl von Pixeln bei einem erfindungsgemäßen LiDAR-System mit verbesserter Genauigkeit ausgelesen werden.

Diese und weitere Merkmale und Eigenschaften der vorliegenden Erfindung werden an Hand der folgenden Darlegungen weiter erläutert:
Das Systemdesign gegenwärtiger Zeit-Digitalwandlereinrichtungen 100 oder TDCs (Time to Digital Converter) sieht zur Feinauflösung eine gewöhnliche Verzögerungsleitung (DL : Delay Line) oder eine so genannte Vernier-Verzögerungsleitung (VDL : Vernier Delay Line) vor. Diese werden gegebenenfalls zu Regelschleifen erweitert, so dass sich eine vermeintlich konstante Verzögerungszeit einstellt und somit die Zeitspanne zwischen einem Stoppereignis (Stopp-Event) und einem nächsten Taktereignis (clk-Event) gemessen werden kann.

In einem optischen 3D-Umfelderfassungssystem, z.B. bei Lidar-Systemen, basierend auf direkter Flugzeitmessung (direct TOF) sind die Entfernungsauflösung und die Genauigkeit von der Genauigkeit der Zeitmessung abhängig.

Die bestehenden Konzepte weisen ein Defizit in der Genauigkeit und Reproduzierbarkeit der Zeitmessung im Hinblick auf Halbleiterprozessschwankungen, parasitäre Effekte und äußere Störeinflüssen auf.

Diese reduzieren und verfälschen die Zeitauflösung und somit die Ortsauflösung irreversibel.

Der Nachteil der vorherrschenden Architektur entsteht auf Grund der vergleichsweise niedrigen Wiederholrate des Stoppereignisses, die zugleich die maximale Regelgeschwindigkeit vorgibt. Ohne Empfangspuls/-signal kann das System nicht nachgeregelt werden.

Somit lassen sich Störeinflüsse, verursacht durch thermische oder parasitäre Effekte, nicht ausregeln. Diese limitieren die Zeitauflösung.

Zudem lassen sich die gegenwärtigen Systemkonzepte für Pixelarrays nur flächenintensiv integrieren, da für jedes Pixel eine eigene Regelschleife notwendig ist.

Dem Anspruch an eine thermisch unabhängige und detaillierte Bildgebung können diese Verfahren nicht gerecht werden, da sich die Zeitauflösung und der Fehlereinfluss unverhältnismäßig gegenüberstehen.

Das erfindungsgemäß vorgeschlagene Konzept ist in der Lage, Prozessschwankungen und andere deterministische Effekte zu korrigieren, und zwar auch dann, wenn kein Eingangssignal vorliegt, so dass dadurch eine deutliche Verbesserung der Auflösung und der Reproduzierbarkeit erreicht wird.

Erfindungsgemäß wird dies erreicht durch die Verlagerung der Regelschleife, die sich auf eine feste Taktperiode einstellt, unabhängig ist von einem Stoppereignis und mit einer definierten Regelgeschwindigkeit arbeitet. Das bedeutet, dass ein kalibrierter Systemzustand bereits vor Eintreffen eines Stoppereignisses vorliegt und ein exaktes und reproduzierbares Ergebnis erfolgt.

Als vorteilhaft erweist sich diese Topologie ebenfalls, weil sie den schaltungstechnischen Aufwand eines Empfängerarrays, bestehend aus einer Vielzahl von lichtempfindlichen Strukturen (APD, SPAD, etc.) verringert, wie dies in Figur 2 dargestellt ist.

Figur 1 zeigt das Grundkonzept des erfindungsgemäßen Aufbaus. In Figur 2 ist eine einfache Erweiterbarkeit des neuen Konzepts dargestellt.

## Patentansprüche

1. Zeit-Digitalwandlereinrichtung (100), mit:
- einer selbstkalibrierenden n-stufigen Kette einer Anzahl n von Gatterverzögerungsgliedern (50), die zwischen einer Taktsignalleitung (12) zum Zuführen eines Taktsignals (16) und einer Stoppsignalleitung (13) zum Zuführen eines Stoppsignals (17) parallel-seriell geschaltet sind, und
- einer Ladungspumpen- und Phasendetektoreinheit (10) zur rückgekoppelten Steuerung der Gatterverzögerungsglieder (50) mit einem ersten Eingang (10-1) als Regelgrößeneingang, einem zweiten Eingang (10-2) als Führungsgrößeneingang und mit einem Ausgang (10-3) als Stellgrößenausgang,
wobei zur Rückkopplung die Gatterverzögerungslieder (50) mit dem Ausgang (10-3) der Ladungspumpen- und Phasendetektoreinheit (10) verbunden sind, **dadurch gekennzeichnet dass**,
- die Taktsignalleitung (12) mit dem ersten Eingang (10-1) der Ladungspumpen- und Phasendetektoreinheit (10) verbunden ist, und dass,
- eine Gegentaktleitung (14) zum Zuführen eines Gegentaktsignals (18) mit dem zweiten Eingang (10-2) verbunden ist.

2. Zeit-Digitalwandlereinrichtung (100) nach Anspruch 1, bei welcher die Gegentaktleitung (14) zum Zuführen des zum Taktsignal (16) inversen Taktsignals als Gegentaktsignal (18) ausgebildet ist und insbesondere dazu an einem Eingang eine Inversionseinrichtung zum Invertieren des zugeführten Taktsignals (16) aufweist.

3. Zeit-Digitalwandlereinrichtung (100) nach einem der vorangehenden Ansprüche, bei welcher ein jeweiliges Gatterverzögerungsglied (50) ein erstes Verzögerungsglied (1) mit der Taktsignalleitung (12) in Serie geschaltet, ein zweites Verzögerungsglied (2) mit der Stoppsignalleitung (13) in Serie geschaltet und dazwischen parallel- und den Verzögerungsgliedern (1, 2) nachgeschaltet eine Flipflopeinheit (20) aufweist.

4. Zeit-Digitalwandlereinrichtung (100) nach Anspruch 3,
bei welcher eine jeweilige Flipflopeinheit (20) als D-Flipflop ausgebildet ist und einen Datensignaleingang (21), einen Taktsignaleingang (22) und einen Datensignalausgang (23) aufweist, wobei insbesondere der Datensignaleingang (21) mit dem Ausgang (1-2) eines zugeordneten ersten Verzögerungsglieds (1) und der Taktsignaleingang (22) mit dem Ausgang (2-2) eines zugeordneten zweiten Verzögerungsglieds (2) verbunden ist.

5. Zeit-Digitalwandlereinrichtung (100) nach Anspruch 3 oder 4,
bei welcher die Anzahl n erster Verzögerungsglieder (1) in Serie geschaltet in der Taktsignalleitung (12) und/oder die Anzahl n zweiter Verzögerungsglieder (2) in Serie geschaltet in der Stoppsignalleitung (13) ausgebildet sind, insbesondere in einer 1-zu-1-Korrespondenz zueinander und/oder zu der Anzahl n von Flipflopeinheiten (20).

6. Zeit-Digitalwandlereinrichtung (100) nach einem der vorangehenden Ansprüche, sofern rückbezogen auf Anspruch 3,
bei welcher die Gegentaktleitung (14) in Serie geschaltet eine entsprechende Anzahl n dritter Verzögerungsglieder (3) aufweist, welche jeweils aufeinanderfolgend den aufeinanderfolgenden zweiten Verzögerungsgliedern (2) zugeordnet und insbesondere mit diesen über Steueranschlüsse (2-3, 3-4) gekoppelt sind und/oder in einer 1-zu-1-Korrespondenz zueinander vorliegen.

7. Zeit-Digitalwandlereinrichtung (100) nach einem der vorangehenden Ansprüche, sofern rückbezogen auf Anspruch 3,
mit einem Ausgabebus (40), welcher mit den Datenausgangsanschlüssen (23) der Flipflopeinrichtungen (20) verbunden ist.

8. Zeit-Digitalwandlereinrichtung (100) nach einem der vorangehenden Ansprüche, sofern rückbezogen auf Anspruch 3,
bei welcher zur Rückkopplung der Ausgang (10-3) der Ladungspumpen- und Phasendetektoreinheit (10) als Stellgrößenausgang mit den ersten Verzögerungsgliedern (1) verbunden ist, insbesondere über einen jeweiligen Steuereingang (1-3) und/oder über einen Filter gekoppelt.

9. Zeit-Digitalwandlereinrichtung (100) nach einem der vorangehenden Ansprüche, sofern rückbezogen auf Anspruch 3,
bei welcher der Ausgang (10-3) der Ladungspumpen- und Phasendetektoreinheit (10) als Stellgrößenausgang über einen Tiefpassfilter (30) mit Masse verbunden ist.

10. LiDAR-System,
welches zur Flugzeitbestimmung eine Zeit-Digitalwandlereinrichtung (100) nach einem der vorangehenden Ansprüche aufweist.

11. Vorrichtung, welche zur Entfernungsbestimmung und/oder zur Umgebungsüberwachung ein LiDAR-System nach Anspruch 10 aufweist.

## Claims

1. Time-to-digital converter (100),
having:
- a self-calibrating n-stage chain of a number n of gate delay elements (50) that are connected in parallel-series between a clock signal line (12) for supplying a clock signal (16) and a stop signal line (13) for supplying a stop signal (17), and
- a charge pump and phase detector unit (10) for the feedback-based control of the gate delay elements (50), having a first input (10-1) as control variable input, a second input (10-2) as reference variable input and having an output (10-3) as manipulated variable output,
wherein the gate delay elements (50) are connected to the output (10-3) of the charge pump and phase detector unit (10) for feedback purposes, **characterized in that**
- the clock signal line (12) is connected to the first input (10-1) of the charge pump and phase detector unit (10), and **in that**
- a differential line (14) for supplying a differential signal (18) is connected to the second output (10-2).

2. Time-to-digital converter (100) according to Claim 1, in which the differential line (14) is designed to supply the clock signal, inverse to the clock signal (16), as differential signal (18), and to this end in particular has, at an input, an inverter for inverting the supplied clock signal (16).

3. Time-to-digital converter (100) according to either of the preceding claims,
in which a respective gate delay element (50) has a first delay element (1) connected in series with the clock signal line (12), a second delay element (2) connected in series with the stop signal line (13) and a flip-flop unit (20) connected in parallel between them and downstream of the delay elements (1, 2).

4. Time-to-digital converter (100) according to Claim 3, in which a respective flip-flop unit (20) is designed as a D flip-flop and has a data signal input (21), a clock signal input (22) and a data signal output (23), wherein the data signal input (21) is in particular connected to the output (1-2) of an associated first delay element (1) and the clock signal input (22) is in particular connected to the output (2-2) of an associated second delay element (2).

5. Time-to-digital converter (100) according to Claim 3 or 4,
in which the number n of first delay elements (1) are formed connected in series in the clock signal line (12) and/or the number n of second delay elements (2) are formed connected in series in the stop signal line (13), in particular in a 1-to-1 correspondence with one another and/or with the number n of flip-flop units (20).

6. Time-to-digital converter (100) according to one of the preceding claims when referring back to Claim 3,
in which the differential line (14) has a corresponding number n of third delay elements (3) connected in series, which delay elements are each assigned successively to the successive second delay elements (2) and in particular coupled thereto via control connections (2-3, 3-4) and/or are in a 1-to-1 correspondence with one another.

7. Time-to-digital converter (100) according to one of the preceding claims when referring back to Claim 3, having an output bus (40) that is connected to the data output connections (23) of the flip-flop units (20).

8. Time-to-digital converter (100) according to one of the preceding claims when referring back to Claim 3,
in which the output (10-3) of the charge pump and phase detector unit (10) is connected, as manipulated variable output, to the first delay elements (1) for feedback purposes, in particular coupled via a respective control input (1-3) and/or via a filter.

9. Time-to-digital converter (100) according to one of the preceding claims when referring back to Claim 3,
in which the output (10-3) of the charge pump and phase detector unit (10) is connected, as manipulated variable output, to ground via a low-pass filter (30).

10. Lidar system, having a time-to-digital converter (100) according to one of the preceding claims for determining a time of flight.

11. Device having a lidar system according to Claim 10 for determining a distance and/or for monitoring an environment.

## Revendications

1. Convertisseur temps-numérique (100), comportant :
- une chaîne à n étages à auto-étalonnage d'un nombre n d'éléments de temporisation de porte (50), lesquels sont montés en parallèle-série entre une ligne de signal d'horloge (12) destinée à acheminer un signal d'horloge (16) et une ligne de signal d'arrêt (13) destinée à acheminer un signal d'arrêt (17), et
- une unité pompe de charge et détecteur de phase (10) pour la commande asservie des éléments de temporisation de porte (50), qui comporte une première entrée (10-1) comme entrée de grandeur de régulation, une deuxième entrée (10-2) comme entrée de grandeur de guidage et une sortie (10-3) comme sortie de grandeur de réglage,
dans lequel, à des fins de rétroaction, les éléments de temporisation de porte (50) sont reliés à la sortie (10-3) de l'unité pompe de charge et détecteur de phase (10), **caractérisé en ce que**
- la ligne de signal d'horloge (12) est reliée à la première entrée (10-1) de l'unité pompe de charge et détecteur de phase (10), et **en ce que**
- une ligne push-pull (14) destinée à acheminer un signal push-pull (18) est reliée à la deuxième entrée (10-2).

2. Convertisseur temps-numérique (100) selon la revendication 1, dans lequel la ligne push-pull (14) est conçue pour acheminer le signal d'horloge inverse du signal d'horloge (16) comme signal push-pull (18) et comporte en particulier à cet effet au niveau d'une entrée un inverseur destiné à inverser le signal d'horloge (16) acheminé.

3. Convertisseur temps-numérique (100) selon l'une des revendications précédentes,
dans lequel un élément de temporisation de porte (50) respectif comporte un premier élément de temporisation (1) monté en série avec la ligne de signal d'horloge (12), un deuxième élément de temporisation (2) monté en série avec la ligne de signal d'arrêt (13), et une unité à bascule (20) montée en parallèle entre ceux-ci et en aval des éléments de temporisation (1, 2).

4. Convertisseur temps-numérique (100) selon la revendication 3, dans lequel une unité à bascule (20) respective est réalisée sous la forme d'une bascule D et comporte une entrée de signal de données (21), une entrée de signal d'horloge (22) et une sortie de signal de données (23), dans lequel, en particulier, l'entrée de signal de données (21) est reliée à la sortie (1-2) d'un premier élément de temporisation (1) associé et l'entrée de signal d'horloge (22) est reliée à la sortie (2-2) d'un deuxième élément de temporisation associé (2).

5. Convertisseur temps-numérique (100) selon la revendication 3 ou 4,
dans lequel le nombre n de premiers éléments de temporisation (1) montés en série dans la ligne de signal d'horloge (12) et/ou le nombre n de deuxièmes éléments de temporisation (2) montés en série dans la ligne de signal d'arrêt (13) sont en particulier définis selon une correspondance biunivoque les uns par rapport aux autres et/ou par rapport au nombre n d'unités à bascule (20).

6. Convertisseur temps-numérique (100) selon l'une des revendications précédentes, dans la mesure où il est fait référence à la revendication 3,
dans lequel la ligne push-pull (14) comporte un nombre n correspondant de troisièmes éléments de temporisation (3) montés en série, qui sont respectivement associés successivement aux deuxièmes éléments de temporisation (2) successifs et sont en particulier couplés à ces derniers par des bornes de commande (2-3, 3-4) et/ou sont présents en correspondance biunivoque les uns par rapport aux autres.

7. Convertisseur temps-numérique (100) selon l'une des revendications précédentes, dans la mesure où il est fait référence à la revendication 3,
comprenant un bus de sortie (40) qui est relié aux bornes de sortie de données (23) des unités à bascule (20).

8. Convertisseur temps-numérique (100) selon l'une des revendications précédentes, dans la mesure où il est fait référence à la revendication 3,
dans lequel, à des fins de rétroaction, la sortie (10-3) de l'unité pompe de charge et détecteur de phase (10) est reliée comme sortie de grandeur de réglage aux premiers éléments de temporisation (1), et est en particulier couplée par l'intermédiaire d'une entrée de commande (1-3) respective et/ou par l'intermédiaire d'un filtre.

9. Convertisseur temps-numérique (100) selon l'une des revendications précédentes, dans la mesure où il est fait référence à la revendication 3,
dans la lequel la sortie (10-3) de l'unité pompe de charge et détecteur de phase (10) est reliée à la terre comme sortie de grandeur de réglage par l'intermédiaire d'un filtre passe-bas (30).

10. Système LiDAR,
qui comporte un convertisseur temps-numérique (100) selon l'une des revendications précédentes, pour déterminer un temps de vol.

11. Dispositif,
qui comporte un système LiDAR selon la revendication 10 pour déterminer une distance et/ou pour surveiller l'environnement.
